# EUROPÄISCHE PATENTANMELDUNG

(11) **EP 1 566 863 A2**
(43) Veröffentlichungstag der Anmeldung: **24.08.2005**
(21) Anmeldenummer: 05002099.9
(22) Anmeldetag: 02.02.2005
(51) Int. Cl.: H01R 13/58, H02G 3/08, H02G 3/22, H02G 15/007

(54) **Gehäuseanordnung**

(30) Priorität: 19.02.2004 DE 102004008003
(71) Anmelder: Vossloh-Schwabe Deutschland GmbH, 73660 Urbach (DE)
(72) Erfinder: Höfer, Ernst, 73614 Schorndorf (DE); Sterzik, Manfred, 73614 Schorndorf (DE); Kiener, Raymond, 68124 Logelbach (FR)
(74) Vertreter: Rüger, Barthelt & Abel Patentanwälte

(57) **Zusammenfassung**

An einer Gehäuseanordnung (1) ist zumindest eine Zugentlastungseinrichtung (19) ausgebildet, zu der einstückig an dem betreffenden Gehäuseteil angeformte Federschenkel (31, 32) gehören, die gemeinsam und zwischen einander ein Klemmstück (28) tragen. Das Klemmstück verbindet die Federabschnitte (31, 32) einstückig miteinander. Die Zugentlastungseinrichtung ist somit Bestandteil des Gehäuses und wird mit diesem hergestellt, ohne dass zusätzliche Produktions- oder Montageschritte erforderlich wären.

## Beschreibung

Die Erfindung betrifft die Ausbildung eines Gehäuses, insbesondere für elektrische Betriebsmittel, wie sie zum Betrieb von Lampen, wie beispielsweise Gasentladungslampen, erforderlich sind.

Elektrische Betriebsmittel und andere Geräte sind in der Regel an elektrische Leitungen anzuschließen, die in dem Gehäuse zugfest verankert werden müssen. Dazu sind Zugentlastungseinrichtungen in Gebrauch, die meist darauf beruhen, die anzuschließende Leitung festzuklemmen.

Beispielsweise ist aus der US-PS 4 280 746 ein aus zwei Kunststoffschalen bestehendes Steckergehäuse bekannt, an das ein Kabel anzuschließen ist. Zur Zugentlastung weisen die Gehäuseschalen jeweils ein über ein Scharnier angelenktes Gehäuseteil auf, an dessen Ende ein halbkreisförmiger, mit zwei Befestigungsfortsätzen versehener Ansatz vorgesehen ist. Die einander gegenüber liegenden Ansätze beider Gehäusehälften bilden gemeinsam eine Manschette, deren Hälften durch Rastmittel aneinander zu sichern sind. An der Innenseite der Manschette sind Vorsprünge ausgebildet, um das Kabel axial festzulegen.

Der Durchmesser der anzuschließenden Leitung und die Größe der Manschette müssen genau aufeinander abgestimmt sein, um eine wirksame axiale Befestigung der Leitung zu bewirken.

Des Weiteren ist aus der DE 102 09 570 A1 ein elektrischer Kabelstecker bekannt, dessen Steckergehäuse einen beweglich gelagerten Teil aufweist. Dieses Teil ist mit einer Klemmfeder versehen, die mit dem Mantel des Kabels in Berührung kommt. Der Klemmfeder gegenüber liegend ist an dem anderen Gehäuseteil ein gezahntes Widerlager angeordnet, dessen Zähne sich in den Mantel des Kabels graben.

Die Federklemme ist an dem Gehäuse zu befestigen. Dies stellt einen erheblichen Montageaufwand dar.

Des Weiteren ist aus der DE 199 26 332 C1 eine Kabelklemme bekannt, die zur Festlegung von Kabeln dient. Zu der Kabelklemme gehört ein Aufnahmeteil, das zwei benachbarte rinnen- oder muldenartige Vertiefungen zur Aufnahme von Kabeln aufweist. Zu beiden Seiten der benachbarten Vertiefungen ragen gezahnte Seitenwände auf, an denen eine Klemmfeder eingerastet werden kann. Die Klemmfeder kann zur Anpassung an verschiedene Kabeldurchmesser auf verschiedenen Höhenpositionen eingerastet werden. Sie weist zwei mit den Zähnen in Eingriff kommende Rastschenkel, S-förmig gebogene Seitenabschnitte und einen wellenförmigen Klemmteil auf.

Es ist Aufgabe der Erfindung, eine Gehäuseanordnung zu schaffen, bei der die Zugentlastung der anzuschließenden Leitungen auf besonders einfache Weise sicher gestellt ist.

Diese Aufgabe wird mit der Gehäuseanordnung nach Anspruch 1 gelöst:

Die erfindungsgemäße Gehäuseanordnung geht von einem zumindest zweiteiligen Gehäuse aus mit einer Zugentlastungseinrichtung, die an dem betreffenden Gehäuseteil einstückig ausgebildet ist und ein federnd gelagertes Klemmstück aufweist. Dieses ist vorzugsweise flach und plattenartig ausgebildet. Die Federwirkung ist dabei vorzugsweise so groß, dass Leitungen unterschiedlichen Durchmessers angeschlossen werden können und dabei normgerecht festgelegt werden. Dazu übersteigt der zulässige Federhub vorzugsweise die Dicke des Klemmstücks. In Ruheposition, d.h. bei entspanntem Federmittel, ragt das Klemmstück etwa bis zur Mitte der oberen Hälfte der Anschlussöffnung. Der zulässige Federhub ist vorzugsweise so groß, dass auch Kabel angeschlossen werden können, die die Anschlussöffnung ganz ausfüllen. Der Federhub beträgt in einem solchen Fall ein Drittel bis die Hälfte des Radiuses der Anschlussöffnung.

Bevorzugterweise wird das Federmittel durch zwei Federabschnitte gebildet, die einstückig in das Klemmstück übergehen. Sie tragen das Klemmstück vorzugsweise an zwei einander gegenüber liegenden Seiten desselben. Vorzugsweise sind die Federabschnitte durch wellenförmig gebogene Streifen aus Gehäusematerial ausgebildet. Das Gehäuse kann somit einschließlich der Zugentlastungseinrichtung in einem einzigen Fertigungsvorgang, beispielsweise einem Spritzgussvorgang, ausgebildet werden. In diesem Fall ist die Zugentlastungseinrichtung nach dem Entformen des Gehäuseteils aus seiner Spritzgussform vollständig vorhanden.

Die wellenförmig gebogenen Federabschnitte sind vorzugsweise etwa streifenförmig ausgebildet, wobei der Streifen vorzugsweise eine konstante Dicke aufweist, die wiederum vorzugsweise mit der Dicke des Klemmstücks übereinstimmen kann. Die Streifen sind zueinander vorzugsweise spiegelsymmetrisch ausgebildet und ihre Flachseiten verlaufen vorzugsweise parallel zu der anzuschließenden Leitung. Ebenso sind die Biegelinien, um die die Streifen zur Festlegung ihrer Wellenform gebogen sind, im Wesentlichen parallel zur Längsrichtung der anzuschließenden Leitung orientiert. Dadurch widerstehen die durch die Streifen gebildeten Druckfedern bei guter radialer Nachgiebigkeit axialen Zugkräften verlässlich.

Vorzugsweise ist dem Klemmstück gegenüber liegend ein profiliertes Widerlager angeordnet, an das die Leitung durch das Klemmstück angepresst wird. Das Widerlager weist vorzugsweise quer zur Leitung verlaufende Rippen auf, um eine axiale Festlegung der Leitung zu bewirken.

Die soweit beschriebenen Zugentlastungseinrichtungen sind äußerst platzsparend. Sie benötigen lediglich oberhalb jeder Leitung Platz. In Seitenrichtung bauen sie jedoch schmal. Dies eröffnet die Möglichkeit, die einzelnen Anschlussöffnungen für Leitungen in einem geringen Abstand zueinander anzuordnen und dennoch mit jeweils separaten, d.h. individuellen Zugentlastungseinrichtungen zu versehen. Dadurch können an benachbarten Klemmstellen Leitungen mit unterschiedlichem Durchmesser festgelegt werden. Dies unterscheidet die Erfindung von Konstruktionen, bei denen benachbarte Leitungen durch eine gemeinsame Klemme festgelegt sind.

Aus fertigungstechnischer Sicht ist es vorteilhaft, wenn zwischen der Zugentlastungseinrichtung und der benachbarten Gehäusewand ein Spalt vorhanden ist. Zur Verbesserung der Abstützung der Zugentlastungseinrichtung in Axialrichtung kann an dem anderen Gehäuseteil eine Gehäusewand vorgesehen sein, die in diesen Spalt greift und dadurch die Zugentlastungseinrichtung bezüglich Zugkräften die an der angeschlossenen Leitung wirken, zusätzlich abstützt. Außerdem wird es als vorteilhaft angesehen, die Zugentlastungseinrichtungen an eine Gehäusewand anzuformen, die parallel zu der Klemmrichtung der einzelnen Zugentlastungseinrichtungen orientiert ist. Die Gehäusewand liegt somit in einer Ebene, die radial zu den Leitungen orientiert ist. Sie kann zu beiden Seiten der Leitungen durch eine Rasteinrichtung gehalten sein und ist hinsichtlich der Lagerung der Zugentlastungseinrichtungen steif.

Bei einer bevorzugten Ausführungsform sind die Gehäuseteile über ein Scharnier miteinander verbunden und durch ein Rastmittel aneinander gesichert. Dies erleichtert die Montage. Die anzuschließenden Leitungen werden bei noch offenem Gehäuse angeschlossen, wonach das Gehäuse durch Niederklappend es einen Gehäuseteils und Verrasten der beiden Gehäuseteile miteinander geschlossen wird. In diesem Zustand sind die angeschlossenen Leitungen automatisch auch festgeklemmt, so dass die Zugentlastung wirksam ist.

Weitere Einzelheiten vorteilhafter Ausführungsformen der Erfindung ergeben sich aus der Zeichnung sowie der zugehörigen Figurenbeschreibung und Ansprüchen.

In der Zeichnung ist ein Ausführungsbeispiel der Erfindung veranschaulicht. Es zeigen:
- Figur 1: die Gehäuseanordnung in aufgeklappter Seitenansicht,
- Figur 2: die Gehäuseanordnung nach Figur 1 in geschlossenem Zustand,
- Figur 3: die Gehäuseanordnung nach Figur 1 und 2 mit abgenommenem oberem Gehäuseteil in Vorderansicht,
- Figur 4: die Gehäuseanordnung nach Figur 3 mit abgenommenem oberen Gehäuseteil in Seitenansicht,
- Figur 5: die Gehäuseanordnung nach Figur 4 in Draufsicht,
- Figur 6: die Gehäuseanordnung nach Figur 5, geschnitten entlang der Linie A-A,
- Figur 7: das obere Gehäuseteil der Gehäuseanordnung nach Figur 1 und 2 in gesonderter Seitenansicht,
- Figur 8: das Gehäuseteil nach Figur 7 in Vorderansicht,

- Figur 9: das Gehäuseteil nach Figur 7 und 8 in einer Vertikalschnittdarstellung,
- Figur 10: die Einzelheit X des Gehäuseteils nach Figur 9,
- Figur 11: die Zugentlastungseinrichtung nach Figur 10 in einer Ansicht von unten her,
- Figur 12: das Gehäuseteil entsprechend Figur 9 in einer abgewandelten Ausführungsform in einer Rückansicht,
- Figur 13: das Gehäuseteil nach Figur 12 in einer vergrößerten ausschnittsweisen Darstellung,
- Figur 14: eine abgewandelte Ausführungsform einer Gehäuseanordnung entsprechend Figur 4 in Seitenansicht und
- Figur 15: das Gehäuseteil nach Figur 14 in ausschnittsweiser Darstellung (Einzelheit Y) längs geschnitten.

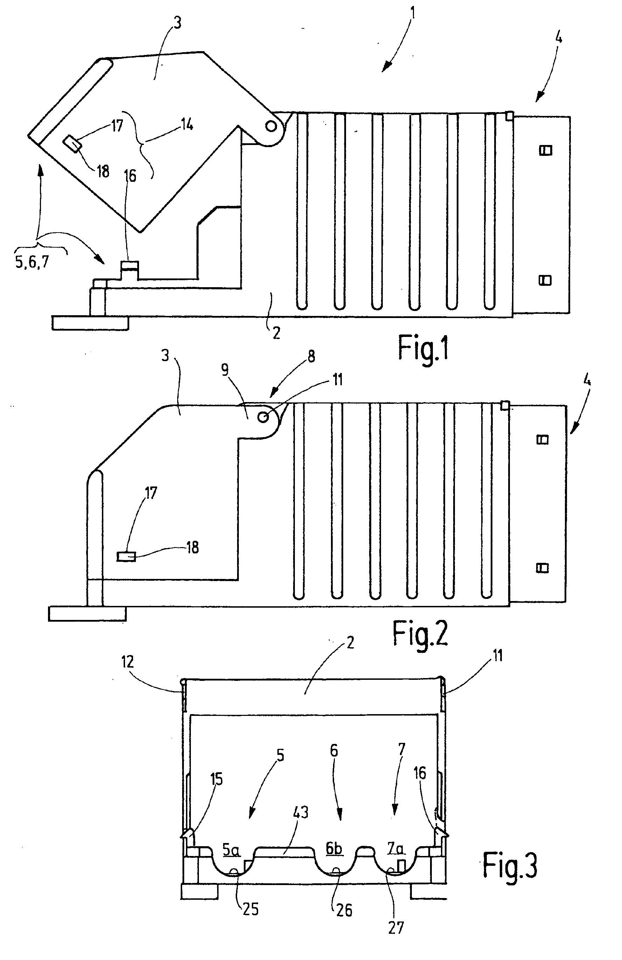

In Figur 1 ist eine Gehäuseanordnung 1 veranschaulicht, die beispielsweise ein vollständiges Gehäuse oder, wie veranschaulicht, ein Teil eines größeren Gehäuses sein kann. Die Gehäuseanordnung 1 ist zweiteilig aufgebaut. Zu ihr gehört ein erstes Gehäuseteil 2, das gewissermaßen einen Sockel bildet, und ein zweites Gehäuseteil 3, das als Haube betrachtet werden kann. Weitere Gehäuseteile, die beispielsweise an dem in Figur 1 rechten Ende 4 an das Gehäuseteil 2 angeschlossen werden können, sind nicht veranschaulicht. Alternativ kann das Gehäuseteil 2 an dem Ende 4 auch geschlossen sein.

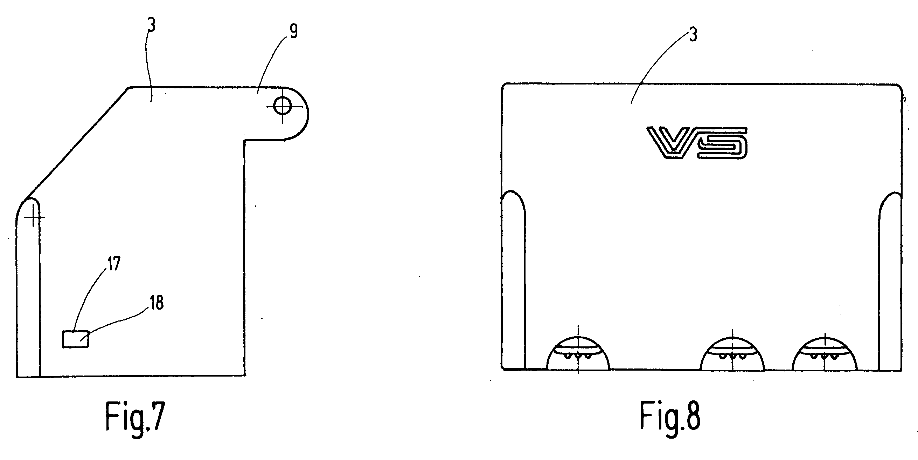

Die Gehäuseteile 2, 3 umschließen einen Innenraum der zur Aufnahme einer elektrischen oder elektronischen Schaltung dient, die nicht weiter veranschaulichte Anschlussmittel, wie beispielsweise Schraubklemmen, zum Anschließen externer Leitungen aufweist. Diese sind durch Anschlussöffnungen 5, 6, 7 in den Gehäuseinnenraum zu führen, wobei die Anschlussöffnungen 5, 6, 7 an der Trennlinie zwischen beiden Gehäuseteilen 2, 3 liegen. Entsprechend sind die unteren Abschnitte 5a, 6a, 7a der Anschlussöffnungen in dem Gehäuseteil 2 ausgebildet während die oberen Abschnitt 5b, 6b, 7b der Anschlussöffnungen 5, 6, 7 in dem oberen Gehäuseteil 3 ausgebildet sind. Die Gehäuseteile 2, 3 sind vorzugsweise über ein Scharnier 8 miteinander verbunden, das durch laschenartige Fortsätze 9 des Gehäuseteils 3 und an dem Gehäuseteil 2 ausgebildete zugeordnete Zapfen 11, 12 gebildet ist. Die Zapfen 11, 12 liegen auf einer gemeinsamen Achse und ragen von einander entgegen gesetzten Seiten des Gehäuseteils 2 voneinander weg, wie insbesondere aus Figur 3 hervorgeht. Somit ist der obere Gehäuseteil 3 um mindestens etwa 90° frei schwenkbar, so dass einerseits voller Zugang zu dem Innenraum der Gehäuseanordnung 1 gewährt wird und andererseits ein sicherer Verschluss desselben möglich ist. Dazu dient auch eine Rasteinrichtung 14, zu der aus Figur 3 ersichtliche, an dem Gehäuseteil 2 ausgebildete Rastnasen 15, 16 und in dem oberen Gehäuseteil 3 ausgebildete zugeordnete Rastöffnungen 17 gehören. Die Rastnasen 15, 16 ragen parallel zueinander senkrecht von dem unteren Gehäuseteil 2 auf. Sie können etwas nach innen aufeinander zu federn. Entsprechend können die Seitenwände des Gehäuseteils 3 etwas voneinander weg federn. Insbesondere aus Figur 7 ist die Rastöffnung 17 ersichtlich, die in der dem Betrachter zugewandten Seitenwand ausgebildet ist. Deckungsgleich dazu ist die in der dem Betrachter abgewandten Seitenwand angeordnete Rastöffnung 18 vorgesehen.

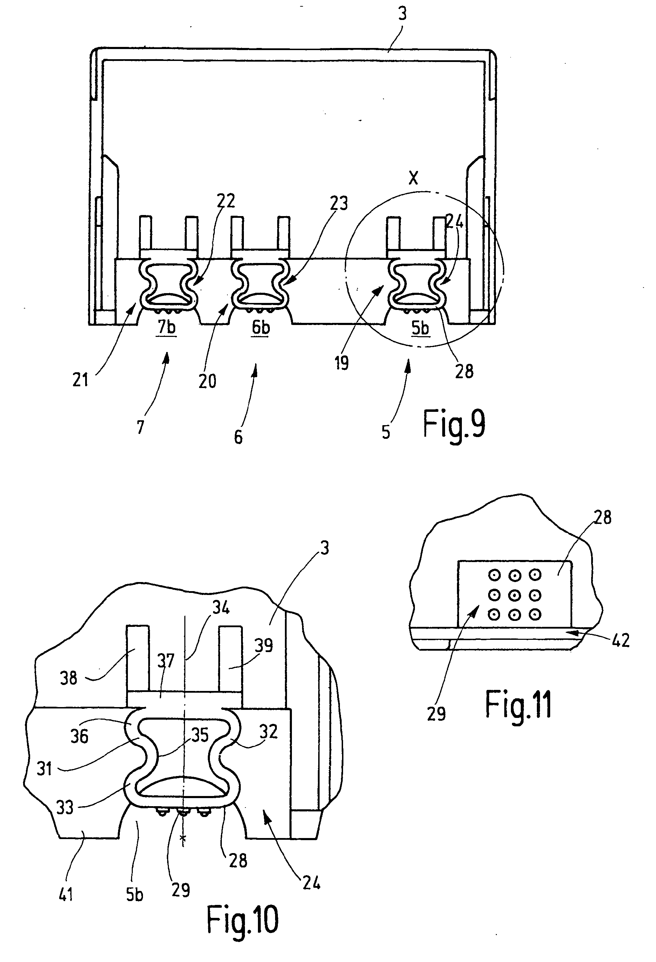

Jeder Anschlussöffnung 5, 6, 7 ist eine Zugentlastungseinrichtung 19, 20, 21 zugeordnet, zu denen, wie Figur 9 zeigt, Federklemmeinrichtungen 22, 23, 24, die an dem Gehäuseteil 3 ausgebildet sind, und Widerlager 25, 26 27 gehören, die an dem anderen Gehäuseteil 2 ausgebildet sind. Letztere gehen insbesondere aus den Figuren 3, 5 und 6 hervor. Nachfolgend ist die Zugentlastungseinrichtung 19 näher beschrieben. Die Beschreibung gilt entsprechend für die Zugentlastungseinrichtungen 20, 21.

Zu der Federklemmeinrichtung 24 gehört ein Klemmstück 28 (Figur 10), das als im Wesentlichen gerade Platte angeordnet und etwa auf Höhe des oberen Drittels des halbkreisförmigen Abschnitts 5b der Anschlussöffnung 5 gehalten ist. Das Klemmstück 28 überbrückt dabei den größten Teil der Anschlussöffnung 5b. Es ist, wie Figur 11 veranschaulicht, im Umriss im Wesentlichen rechteckig ausgebildet und mit ein oder mehreren Noppen 29 versehen. Diese weisen kegelförmige Spitzen auf, um einer angeschlossenen Leitung einen formschlüssigen Halt zu geben. Andere Geometrien, wie beispielsweise Rippen, Zähne oder dergleichen, können vorgesehen werden.

An beiden einander gegenüber liegenden Kanten oder Seiten des Klemmstücks 28 ist dieses von Federabschnitten 31, 32 gehalten. Diese sind spiegelsymmetrisch zueinander angeordnet und jeweils wellenförmig ausgebildet. Darunter ist im vorliegenden Ausführungsbeispiel zu verstehen, dass die Verlängerung des Klemmstücks 28 in einem u-förmigen Bogen 33 zunächst zu einer Symmetrielinie 34 hin gebogen ist, um dann in einem weiteren Bogen 35 wieder von der Symmetrielinie weg zu laufen und mit einem weiteren Bogen 36 wieder zu der Symmetrielinie hin zu weisen. Während das untere Ende des Federabschnitts 31 in das Klemmstück 28 übergeht, geht das obere Ende in eine Konsole 37 über, die einstückig mit dem sonstigen Gehäuse 3 verbunden und über Stützstreben 38, 39 an dem Gehäuse 3 abgestützt ist. Zwischen einer Gehäusewand 41, die der Federklemmeinrichtung 24 benachbart ist, und der Federklemmeinrichtung 24 ist ein aus Figur 11 ersichtlicher Spalt 42 ausgebildet, die Weite dieses Spalts ist vorzugsweise geringfügig größer als die Dicke der oberen Kante einer Gehäusewand 43, die aus Figur 3 ersichtlich und Teil des unteren Gehäuseteils 3 ist.

Die Federelemente 31, 32 weisen einen Federhub auf, der ungefähr ein Fünftel bis ein Drittel des Radiuses des Abschnitts 5b der Anschlussöffnung 5 beträgt. Dadurch kann das Klemmstück 28 bezügl. Figur 9 oder 10 soweit nach oben gedrückt werden, dass es die Anschlussöffnung fast völlig frei gibt, ohne dass dabei die Federelemente 31, 32 brechen.

Die insoweit beschriebene Gehäuseanordnung 1 arbeitet wie folgt:

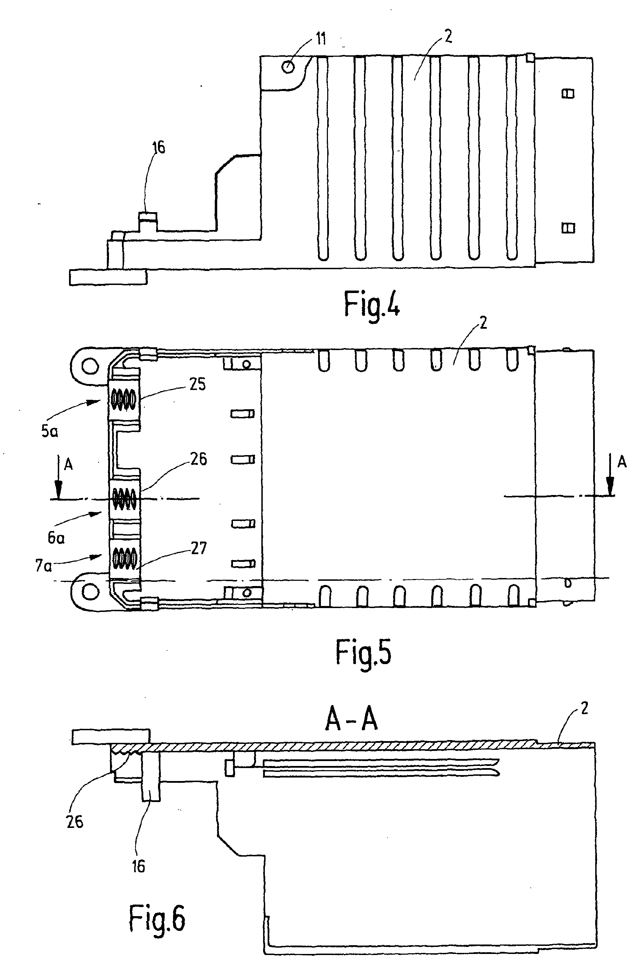

Das Gehäuseteil 2 nimmt zunächst eine Leiterplatte mit elektronischen Bauelementen auf. Dazu können die aus Figur 6 ersichtlichen, an der Innenseite vorgesehenen Rippen 44 vorgesehen sein, zwischen denen eine Nut zur Aufnahme einer Leiterplatte frei bleibt. Die Leiterplatte weist nicht weiter veranschaulichte Anschlussmittel auf, die bis in den Bereich des in Betrieb von dem Gehäuseteil 3 überdeckten Teil des Innenvolumens der Gehäuseanordnung 1 ragen. An diese Anschlussmittel, beispielsweise Schraubklemmen, Federklemmen oder dergleichen, werden einzelne abisolierte Adern eines Kabels angeschlossen. Das betreffende Kabel wird dann auf das jeweils nächste Widerlager 25, 26, 27 aufgelegt und vorläufig gehalten. Das Gehäuseteil 3 befindet sich dabei beispielsweise in der in Figur 1 veranschaulichten Position. Aus dieser heraus wird es nach unten geschwenkt, so dass seine Seitenwände über die Rastnasen 15, 16 finden. Dabei setzen die Klemmstücke 28 auf dem jeweiligen Kabel auf bevor die Rastnasen 15, 16 in die zugeordnete Rastöffnungen 17, 18 einrasten. Mit weiterem Niederdrücken des Gehäuseteils 3 werden die Klemmstücke 28 durch zunehmendes Spannen der Federabschnitte 31, 32 mehr und mehr gegen das betreffende Kabel gepresst, das somit auch fester an das zugeordnete Widerlager 25, 26 oder 27 angepresst wird. Wenn die Rastnasen 15, 16 schlussendlich in die Rastöffnungen 17, 18 finden, halten die gespannten Federabschnitte 31, 32 das Kabel fest gegen das jeweilige Widerlager 25, 26, 27 geklemmt. Es ist somit die gewünschte Zugentlastung des Kabels geschaffen - es ist in Axialrichtung fest gehalten. Die Verbindung erweist sich überdies als vibrationsfest.

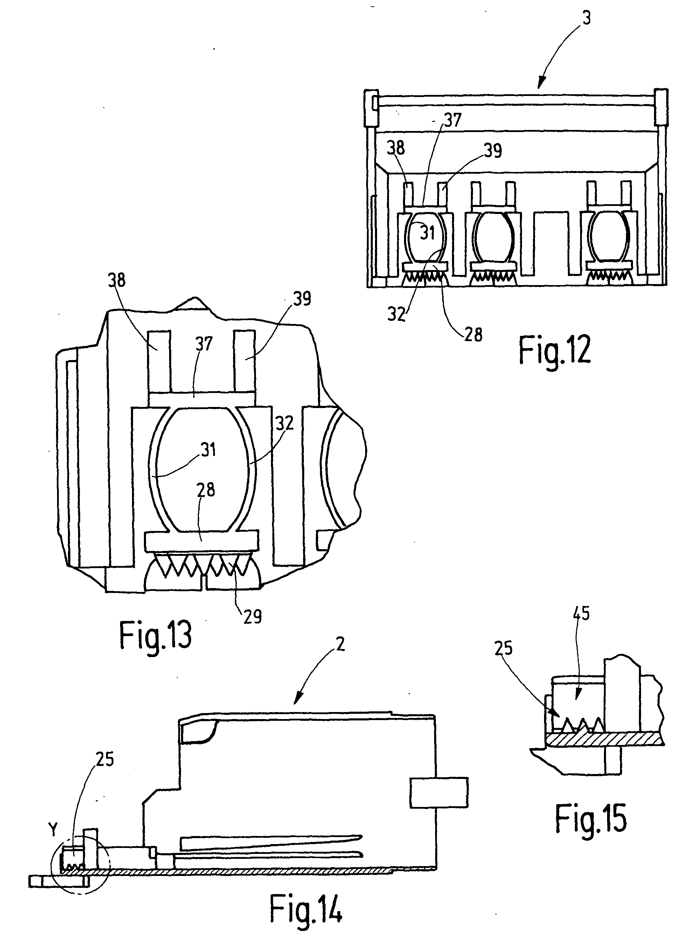

In den Figuren 12 bis 14 ist ein weiteres, derzeit bevorzugtes Ausführungsbeispiel der Erfindung veranschaulicht. Zur Erläuterung wird unter Zugrundelegung gleicher Bezugszeichen auf die vorstehende Beschreibung verwiesen. Abweichend gilt folgendes:

Die Federabschnitte 31, 32 sind als Blattfedern einfach gebogen ausgebildet. Sie beschreiben gemeinsam eine Tonnenform. Ihre Dicke ist geringer als die des Klemmstücks 28, wie auch die der Konsole 37. Die Noppen 29 sind als Kegelspitzen ausgebildet. Die Länge der Federabschnitte 31, 32 übersteigt deren Abstand.

Das Gehäuseteil 2 weist ebenfalls Abwandlungen auf. Die Widerlager sind mit Spitzen 45 versehen, die die sonst vorhandenen Rippen ersetzen.

Das Gehäuseteil 3 ist vorzugsweise aus Polyamid-6.6 gebildet. Die Federschenkel 31, 32 bestehen aus dem gleichen Werkstoff.

An einer Gehäuseanordnung 1 ist zumindest eine Zugentlastungseinrichtung 19 ausgebildet, zu der einstückig an dem betreffenden Gehäuseteil angeformte Federschenkel 31, 32 gehören, die gemeinsam und zwischen einander ein Klemmstück 28 tragen. Das Klemmstück verbindet die Federabschnitte 31, 32 einstückig miteinander. Die Zugentlastungseinrichtung ist somit Bestandteil des Gehäuses und wird mit diesem hergestellt, ohne dass zusätzliche Produktions- oder Montageschritte erforderlich wären.

## Patentansprüche

1. Gehäuseanordnung (1), insbesondere für Lampenbetriebsgeräte,
mit einem ersten Gehäuseteil (2) und mit einem zweiten Gehäuseteil (3), die einen Innenraum umgrenzen, der zur Aufnahme elektrischer Komponenten vorgesehen ist,
mit wenigstens einer Anschlussöffnung (5), die zur Durchführung einer elektrischen Leitung vorgesehen ist,
mit einer Rasteinrichtung (14) zur mechanischen Verbindung der Gehäuseteile (2, 3) miteinander,
mit einer Zugentlastungseinrichtung (19), zu der ein Klemmstück (28) gehört, das über ein Federmittel (31, 32) mit einem der Gehäuseteile (3) einstückig verbunden ist.

2. Gehäuseanordnung nach Anspruch 1, **dadurch gekennzeichnet, dass** das Federmittel (31, 32) durch zwei Federabschnitte gebildet ist.

3. Gehäuseanordnung nach Anspruch 2, **dadurch gekennzeichnet, dass** die Federabschnitte (31, 32) bogenförmig voneinander weg gebogene Streifen aus Gehäusematerial sind, die jeweils mit einem Ende mit dem Klemmstück (28) und mit ihrem anderen Ende mit dem Gehäuseteil (3) verbunden sind.

4. Gehäuseanordnung nach Anspruch 3, **dadurch gekennzeichnet, dass** die Durchbiegung der Federmittel (31, 32) wesentlich geringer ist als deren Länge.

5. Gehäuseanordnung nach Anspruch 2, **dadurch gekennzeichnet, dass** die Federabschnitte (31, 32) wellenförmig gebogene Streifen aus Gehäusematerial sind, die jeweils mit einem Ende mit dem Klemmstück (28) und mit ihrem anderen Ende mit dem Gehäuseteil (3) verbunden sind.

6. Gehäuseanordnung nach Anspruch 1, **dadurch gekennzeichnet, dass** das Gehäuseteil (3), das die Zugentlastungseinrichtung (19) trägt, aus Kunststoff, vorzugsweise Polyamid-6.6, besteht.

7. Gehäuseanordnung nach Anspruch 1, **dadurch gekennzeichnet, dass** die Zugentlastungseinrichtung (19) aus Kunststoff, vorzugsweise Polyamid-6.6, besteht.

8. Gehäuseanordnung nach Anspruch 5, **dadurch gekennzeichnet, dass** das Klemmstück (28) einen rechteckigen Umriss aufweist und dass die Federabschnitte (31, 32) an einander gegenüberliegenden Kanten des Klemmstücks (28) ansetzen.

9. Gehäuseanordnung nach Anspruch 5, **dadurch gekennzeichnet, dass** die wellenförmigen Federabschnitte (31, 32) zueinander spiegelsymmetrisch ausgebildet sind.

10. Gehäuseanordnung nach Anspruch 1, **dadurch gekennzeichnet, dass** jeder Anschlussöffnung (5, 6) eine eigene Zugentlastungseinrichtung (19, 20) zugeordnet ist.

11. Gehäuseanordnung nach Anspruch 1, **dadurch gekennzeichnet, dass** zwischen der Zugentlastungseinrichtung (19) und der benachbarten Gehäusewand (41) ein Spalt (42) ausgebildet ist.

12. Gehäuseanordnung nach Anspruch 9, **dadurch gekennzeichnet, dass** das andere Gehäuseteil (2) einen Wandabschnitt (43) aufweist, der schmaler ist als der Spalt (42).

13. Gehäuseanordnung nach Anspruch 1, **dadurch gekennzeichnet, dass** die Gehäuseteile (2, 3) über ein Scharnier (8) miteinander verbunden sind.

14. Gehäuseanordnung nach Anspruch 1, **dadurch gekennzeichnet, dass** jeder Zugentlastungseinrichtung (19) an dem anderen Gehäuseteil (2) ein Widerlager (25) zugeordnet ist.
